# EUROPÄISCHE PATENTSCHRIFT

(11) **EP 1 242 550 B1**
(45) Veröffentlichungstag und Bekanntmachung des Hinweises auf die Patenterteilung: **07.03.2007**
(21) Anmeldenummer: 00966021.8
(22) Anmeldetag: 15.09.2000
(51) Int. Cl.: C09J 7/02

(54) **KLEBSTOFFE FÜR TIEFGEKÜHLTE SUBSTRATE**
ADHESIVES FOR FROZEN SUBSTRATES
ADHESIFS POUR SUBSTRATS CONGELES

(30) Priorität: 30.09.1999 DE 19946898
(43) Veröffentlichungstag der Anmeldung: 25.09.2002
(73) Patentinhaber: BASF Aktiengesellschaft, 67056 Ludwigshafen (DE)
(72) Erfinder: MEYER-ROSCHER, Bernd, 67434 Neustadt (DE); SCHUMACHER, Karl-Heinz, 67433 Neustadt (DE); BARWICH, Jürgen, 67434 Neustadt (DE); FINK, Ralf, 67117 Limburgerhof (DE); DÜSTERWALD, Uwe, 66851 Queidersbach (DE)
(86) Internationale Anmeldenummer: PCT/EP2000/009022
(87) Internationale Veröffentlichungsnummer: WO 2001/023489

(56) Entgegenhaltungen:
- WO-A-93/13148
- US-A- 4 737 559
- DATABASE WPI Section Ch, Week 199427 Derwent Publications Ltd., London, GB; Class A81, AN 1994-222257 XP002156543 & JP 06 158006 A (MITSUI TOATSU CHEM INC), 7. Juni 1994 (1994-06-07)
- PATENT ABSTRACTS OF JAPAN vol. 016, no. 025 (C-0903), 22. Januar 1992 (1992-01-22) & JP 03 237181 A (SEKISUI CHEM CO LTD), 23. Oktober 1991 (1991-10-23)

## Beschreibung

Die Erfindung betrifft die Verwendung von radikalisch polymerisierten, mit UV-Licht vernetzbaren Polymerisaten, welche zu mindestens 50 Gew % aus C₂ bis C₁₈ Alkyl(meth)acrylaten bestehen, als Klebstoff für die Verklebung von mit dem Polymerisat beschichteten Trägern auf Substraten, dadurch gekennzeichnet, daß es sich bei 0,1 bis 30 Gew % der Monomeren, aus denen das Polymerisat aufgebaut ist, um methyl(meth)-acrylat (Monomere A) , und es sich bei den Substraten um feuchte, insbesondere tiefgekühlte Substrate handelt.

UV-Licht vernetzbare Polymerisate und ihre Verwendung als Klebstoff, z.B. als Schmelzhaftklebstoff, sind z.B. aus DE-A-2 411 169, EP-A-246 848, DE-A-4 037 079 oder DE-A-3 844 444 bekannt.

Für feuchte, insbesondere tiefgekühlte Substrate wurden diese Klebstoffe bisher nicht verwendet.

Für die Herstellung von Tiefkühletiketten werden im allgemeinen Blockpolymere vom Typ Styrol-Isopren-Styrol oder Styrol-Butadien-Styrol eingesetzt. Ein allgemeiner Nachteil dieser Blockcopolymeren liegt in ihrer Weichheit, was zu Schwierigkeiten bei der Verarbeitung und Anwendung führt.

Gewünscht sind alternative Polymerisate als Klebstoff für feuchte, tiefgekühlte Substrate.

Aufgabe der vorliegenden Erfindung war, alternative Polymerisate für eine derartige Verwendung zur Verfügung stellen. Demgemäß wurde die eingangs definierte Verwendung gefunden.

Zur Vernetzung mit UV-Licht kann das Polymerisat einen Fotoinitiator enthalten. Der Fotoinitiator kann an das Polymerisat gebunden sein, er kann aber auch ungebunden und lediglich mit dem Polymerisat vermischt sein.

Übliche Fotoinitiator, die dem Polymerisat zugesetzt werden können sind z.B. Acetophenon, Benzoinether, Benzyldialkylketole oder deren Derivate.

Der Gehalt des zugemischten Fototinitiators beträgt vorzugsweise 0,05 bis 10 Gew. Teile, besonders bevorzugt 0,1 bis 2 Gew. Teile pro 100 Gew. Teile Polymerisat.

Durch Bestrahlung mit energiereichen Licht, insbesondere UV-Licht, bewirkt der Fotoinitiator bzw. die Fotoinitiatorgruppe eine Vernetzung des Polymeren, vorzugsweise durch eine chemische Pfropfreaktion der Fotoinitiatorgruppe mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Der Wellenlängenbereich, in dem die Fotoinitiatorgruppe aktiviert werden kann, d.h. in den die Hauptabsorptionsbande der Fotoinitiatorgruppe liegt, ist vorzugsweise 200 bis 450 mm, besonders bevorzugt 250 bis 350, ganz besonders bevorzugt 250 bis 280 mm.

Bevorzugt ist der Fotoinitiator an das Polymer gebunden.

Das Polymerisat ist durch radikalische Polymerisation aus ethylenisch ungesättigten radikalisch polymerisierbaren Verbindungen erhältlich.

In dem bevorzugten Fall, daß der Fotoinitiator an das Polymerisat gebunden ist, wird vorzugsweise eine ethylenisch ungesättigte Verbindung mit einer Fotoinitiatorgruppe durch Copolymerisation eingebunden.

Das mit UV-Licht vernetzbare Polymerisat besteht vorzugsweise zu 50 bis 99,85 Gew.-%, bevorzugt zu 60 bis 99,4, ganz besonders bevorzugt zu 80 bis 98,9 Gew.-% aus C₂ bis C₁₈ Alkyl (meth) acrylaten. Bevorzugt sind C₂-C₁₀ Alkyl(meth)acrylate, z.B. n-Butylacrylat, Ethylacrylat und 2-Ethylhexylacrylate. Insbesondere werden Mischungen der Alkyl(meth)acrylate verwendet.

Das Polymerisat besteht im Fall des einpolymerisierten Fotoinitiators weiterhin zu 0,05 bis 10 Gew.-%, bevorzugt zu 0,1 bis 2 Gew.-% und besonders bevorzugt zu 0,1 bis 1 Gew.-% aus ethylenisch ungesättigten Verbindungen mit einer Fotoinitiatorgruppe.

Bei der ethylenisch ungesättigten Verbindung mit einer Fotoinitiatorgruppe handelt es sich vorzugsweise um ein Acetophenon- oder besonders bevorzugt ein Benzophenonderivat.

Geeignete Verbindungen sind Acetophenon- oder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis zu 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 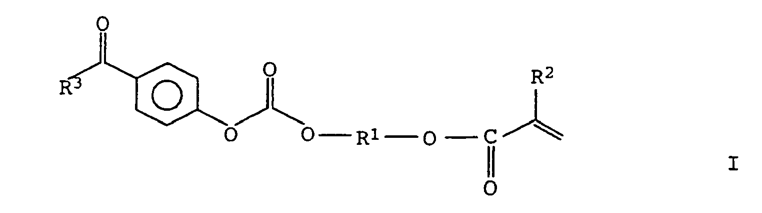 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

R³ steht besonders bevorzugt für eine Methylgruppe oder eine Phenylgruppe.

Das Polymerisat kann weitere ethylenisch ungesättigte Verbindungen als Aufbaukomponenten enthalten. Genannt seine z.B. Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Das Polymerisat kann weiterhin Monomere mit Carbonsäure, Sulfonsäure oder Phosphonsäuregruppen enthalten. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, (Meth)acrylamid oder Phenyloxyethylglykolmono-(meth-) - acrylat, Glycidylacrylat, Glycidylmethacrylat, Amino-(meth-)-acrylate wie 2-Aminoethyl-(meth-)acrylat genannt.

Wesentlich ist, daß es sich bei insgesamt 0,1 bis 30 Gew.-% der ethylenisch ungesättigten Verbindungen, aus denen das Polymerisat aufgebaut ist, um die eingangs definierten Monomere A handelt.

Monomere A sind Methyl methacrylat, oder Methylacrylat.

Bevorzugt handelt es sich bei 0,5 bis 20 Gew.-%, besonders bevorzugt bei 1 bis 12 Gew.-% der Monomeren um Monomere A.

Das Polymerisat hat vorzugsweise einen K-Wert von 30 bis 80, besonders bevorzugt von 40 bis 60, gemessen in 1 % Lösung, (Lösungsmittel: Tetrahydrofuran, 21°C).

Der K-Wert nach Fikentscher ist ein Maß für das Molekulargewicht und Viskosität des Polymerisats.

Die Glasübertragungstemperatur (Tg) des Polymerisats beträgt vorzugsweise -60 bis +10°C, besonders bevorzugt -55 bis 0°C, ganz besonders bevorzugt -55 bis -20°C.

Die Glasübertragungstemperatur des Polymerisats läßt sich nach üblichen Methoden wie Differentialthermoanalyse oder Differential Scanning Calorimetrie (s. z.B. ASTM 3418/82, sog. "midpoint temperature" bestimmen.

Die UV-verneztbaren Polymerisat können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und isoPropanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen oder Ketonperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die neuen UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Das Polymerisat kann als Schmelze, als Lösung in einem organischen Lösungsmittel oder als wäßrige Dispersion vorliegen und in dieser Form verwendet werden.

Vorzugsweise werden die Polymerisate als Schmelze, d.h. im wesentlichen lösungsmittelfrei (Lösungsmittelgehalt vorzugsweise kleiner 2 Gew.-%, bezogen auf das Polymerisat), verwendet.

Das Polymerisat kann, vorzugsweise aus der Schmelze, nach üblichen Verfahren, z.B. Streichen, Walzen, Gießen, Rakeln auf Träger aufgetragen werden. Im Falle der Lösung oder wäßrigen Dispersion wird das Lösungsmittel oder Wasser entfernt, im allgemeinen durch Trocknung.

Zur Erhöhung der Fließfähigkeit des Polymerisats kann die Temperatur des Polymerisats beim Auftragen als Schmelze 10 bis 150°C, vorzugsweise 50 bis 150, besonders bevorzugt 100 bis 150°C betragen.

Bevorzugte Schichtdicken sind z.B. 2 bis 50 µm, besonders bevorzugt 5 bis 40, ganz besonders bevorzugt 10 bis 30 µm.

Als Träger in Betracht kommen z.B. Etiketten aus Papier oder Kunststoff, z.B. Polyester, Polyolefine oder PVC, sowie Klebebänder oder Folien aus den vorstehenden Kunststoffen.

Danach werden die Polymerisate mit energiereicher Strahlung, vorzugsweise UV-Licht vernetzt.

Im allgemeinen werden die beschichteten Träger dazu auf ein Transportband gelegt und das Transportband an einer Strahlungsquelle, z.B. einer UV-Lampe vorbeigeführt.

Der Vernetzungsgrad der Polymerisate hängt von der Dauer und Intensität der Bestrahlung ab.

Vorzugsweise beträgt die Strahlungsenergie insgesamt 100 bis 1500 mJ/cm² bestrahlte Fläche.

Die erhaltenen, mit Polymerisat beschichteten Träger können auf feuchte, insbesondere tiefgekühlte Substrate geklebt werden. Es handelt sich dabei z.B. um mit Papier oder Kunststofffolien verpacktes Gefriergut.

Trotz der Feuchtigkeit, bzw. eines Wasserfilms oder einer Eisschicht auf den Substraten ist eine sehr gute Haftung der beschichteten Träger z.B. Etiketten festzustellen.

Das Polymerisat eignet sich daher als Klebstoff, bzw. Haftklebstoff, insbesondere Schmelzhaftklebstoff, für feuchte, insbesondere tiefgekühlte Substrate. Im Vergleich zu Schmelzhaftklebstoffen auf Basis von Styrol-Butadien (Isopren)-Styrol-Blockcopolymeren zeigen die Polymerisate eine deutlich höhere Wärmestandfestigkeit und vermindertes "Durchschlagen", worunter ein Durchdringen der Klebstoffbeschichtung auf die Oberseite, die im allgemeinen bedruckte Seite des Trägers, zu verstehen ist. Das "Durchschlagen" führt insbesondere bei Papieretiketten zu einer unerwünschten optischen Beeinträchtigung.

### Beispiele

### I) Polymerisate (nicht anmeldungsgemäß)

- P1:: Acrylpolymerisat, aufgebaut aus 91 Gew.-% Ethylhexylacrylat und 9 Gew.-% Hydroxyethylacrylat
- V1:: Acrylpolymerisat, aufgebaut aus 100 Gew.-% Ethylhexylacrylat

Die Herstellung der Polymerisate erfolgte durch übliche Lösungspolymerisation und anschließendes Abdestillieren des Lösemittels

### II) Herstellung der beschichteten Träger und Prüfung

Die Polymerisate P1 und V1 wurden jeweils aus der Schmelze bei einer Temperatur von 120°C auf Etikettenpapier beschichtet. Die Schichtdicke betrug 20 µm.

Das beschichtete Etikettenpapier wurde mit UV-licht bestrahlt und das Polymerisat vernetzt.

Das Etikettenpapier wurde auf eine Polyethylenplatte geklebt und mit einer Zugprüfmaschine die zum Abziehen notwendige Kraft in N/25mm bestimmt.

Der Versuch wurde bei unterschiedlichen Temperaturen der Polyethylenoberfläche durchgeführt:

| | +25°C | +5°C | -20°C | -10°C ^{*} |
|---|---|---|---|---|
| P1 | 4,2 | 5,8 | 3,7 | 3,6 |
| V1 | 1,9 | 3,5 | 3,3 | 3,0 |

| | | | | |
|---|---|---|---|---|
| ^{*} Die Polyethylenoberfläche wurde zunächst befeuchtet, so daß ein geschlossener Wasserfilm entstand. | | | | |

## Patentansprüche

1. Verwendung von radikalisch polymerisierten, mit UV-Licht vernetzbaren Polymerisaten, welche zu mindestens 50 Gew % aus C₂ bis C₁₈ Alkyl(meth)acrylaten bestehen, als Klebstoff für die Verklebung von mit dem Polymerisat beschichteten Trägern auf Substraten, **dadurch gekennzeichnet, daß** es sich bei 0,1 bis 30 Gew % der Monomeren, aus denen das Polymerisat aufgebaut ist, um Methyl(meth)acrylat (Monomere A) handelt und es sich bei den Substraten um feuchte, insbesondere tiefgekühlte Substrate handelt.

2. Verwendung gemäß Anspruch 1, **dadurch gekennzeichnet, daß** das Polymerisat zu 50 bis 99,85 Gew.-% aus C₂ bis C₁₈ Alkyl(meth)acrylaten und zu 0,05 bis 10 Gew % aus ethylenisch ungesättigten Verbindungen mit einer Fotoinitiatorgruppe besteht.

3. Verwendung gemäß Anspruch 2, **dadurch gekennzeichnet, daß** es sich bei der ethylenisch ungesättigten Verbindung mit einer Fotoinitiatorgruppe um ein Acetophenon- oder Benzophenonderivat handelt.

4. Verwendung gemäß einem der Ansprüche 1 bis 3, **dadurch gekennzeichnet, daß** das Polymerisat einen K-Wert von 30 bis 80, gemessen in 1 Gew.-%iger Lösung des Polymerisats in Tetrahydrofuran bei 21°C hat.

5. Verwendung gemäß einem der Ansprüche 1 bis 4, **dadurch gekennzeichnet, daß** die Glasübergangstemperatur des Polymerisats -60 bis +10°C beträgt.

6. Verwendung gemäß einem der Ansprüche 1 bis 5, **dadurch gekennzeichnet, daß** das Polymerisat als Schmelze aufgetragen wird.

7. Verwendung gemäß einem der Ansprüche 1 bis 6, **dadurch gekennzeichnet, daß** die Polymerisate auf Träger, insbesondere Etiketten, Klebebänder oder Folien, aufgetragen, anschließend durch energiereiche Strahlung, insbesondere UV-Licht, vernetzt und die erhaltenen, mit dem Polymerisat beschichteten Träger auf feuchte, insbesondere tiefgekühlte Substrate geklebt werden.

8. Verfahren zum Aufbringen von Trägern, insbesondere Etiketten, Klebebändern oder Folien, auf feuchte, insbesondere tiefgekühlte Substrate, **dadurch gekennzeichnet, daß** ein Polymerisat gemäß einem der Ansprüche 1 bis 5 aus der Schmelze, als Lösung oder wäßrige Dispersion auf die Träger aufgetragen, im Falle der Lösung oder wäßrigen Dispersion das Lösungsmittel oder das Wasser entfernt, das Polymerisat anschließend durch energiereiche Strahlung, insbesondere UV-Licht, vernetzt und die erhaltenen, mit dem Polymerisat beschichteten Träger auf feuchte, insbesondere tiefgekühlte Substrate geklebt werden.

## Claims

1. The use of free-radically polymerized, UV-crosslinkable addition polymers which consist to the extent of at least 50% by weight of C₂ to C₁₈ alkyl (meth)acrylates as adhesives for the bonding of carriers coated with the polymer on substrates, wherein from 0.1 to 30% by weight of the monomers of which said polymer is composed are methyl (meth)acrylate (monomers A) and said substrates are moist substrates, especially refrigerated substrates.

2. The use according to claim 1, wherein said polymer consists to the extent of from 50 to 99.85% by weight of C₂ to C₁₈ alkyl (meth)acrylates and to the extent of from 0.05 to 10% by weight of ethylenically unsaturated compounds having a photoinitiator group.

3. The use according to claim 2, wherein the ethylenically unsaturated compound having a photoinitiator group is an acetophenone derivative or benzophenone derivative.

4. The use according to any of claims 1 to 3, wherein said polymer has a K value of from 30 to 80, measured in 1% strength by weight solution of said polymer in tetrahydrofuran at 21°C.

5. The use according to any of claims 1 to 4, wherein the glass transition temperature of said polymer is from -60 to +10°C.

6. The use according to any of claims 1 to 5, wherein said polymer is applied as a melt.

7. The use according to any of claims 1 to 6, wherein said polymers are applied to carriers, especially labels, adhesive tapes or sheets, subsequently crosslinked by high-energy radiation, especially UV light, and the resulting carriers coated with said polymer are bonded to moist substrates, especially refrigerated substrates.

8. A method of applying carriers, especially labels, adhesive tapes or sheets, to moist substrates, especially refrigerated substrates, which comprises applying a polymer as set forth in any of claims 1 to 5 from the melt, as a solution or as an aqueous dispersion to said carriers, in the case of the solution or aqueous dispersion removing the solvent or the water, subsequently crosslinking said polymer by means of high-energy radiation, especially UV light, and bonding the resulting carriers, coated with the polymer, to moist substrates, especially refrigerated substrates.

## Revendications

1. Utilisation de polymères réticulables à la lumière U.V., polymérisés par voie radicalaire, qui sont constitués pour au moins 50 % en poids de (méth)acrylates d'alkyle en C₂-C₁₈, comme adhésif pour le collage de supports enduits du polymère sur des substrats, **caractérisée en ce que**, pour ce qui concerne 0,1 à 30 % en poids des monomères, à partir desquels le polymère est constitué, il s'agit de (méth)acrylate de méthyle (monomère A) et, pour ce qui concerne les substrats, il s'agit de substrats humides, en particulier refroidis très profondément.

2. Utilisation suivant la revendication 1, **caractérisée en ce que** le polymère est constitué de 50 à 99,85 % en poids de (méth)acrylates d'alkyle en C₂-C₁₈, et de 0,05 à 10 % en poids de composés éthyléniquement insaturés comportant un groupe de photoamorceur.

3. Utilisation suivant la revendication 2, **caractérisée en ce que**, pour ce qui concerne le composé éthyléniquement insaturé comportant un groupe de photoamorceur, il s'agit d'un dérivé d'acétophénone ou de benzophénone.

4. Utilisation suivant l'une des revendications 1 à 3, **caractérisée en ce que** le polymère présente une valeur K de 30 à 80, mesurée dans une solution à 1 % en poids du polymère dans du tétrahydrofuranne à 21°C.

5. Utilisation suivant l'une des revendications 1 à 4, **caractérisée en ce que** la température de transition vitreuse du polymère est de -60 à +10°C.

6. Utilisation suivant l'une des revendications 1 à 5, **caractérisée en ce que** le polymère est appliqué sous la forme d'une masse fondue.

7. Utilisation suivant l'une des revendications 1 à 6, **caractérisée en ce que** les polymères sont appliqués sur des supports, en particulier des étiquettes, des bandes adhésives ou des feuilles, ensuite réticulés par un rayonnement riche en énergie, en particulier une lumière U.V., et les supports obtenus, enduits du polymère, sont collés sur des substrats humides, en particulier très profondément refroidis.

8. Procédé d'application de supports, en particulier d'étiquettes, de bandes adhésives ou de feuilles, sur des substrats humides, en particulier très profondément refroidis, **caractérisé en ce qu'**un polymère suivant l'une des revendications 1 à 5 est, à partir de la masse fondue, appliqué sur les supports sous la forme d'une solution ou d'une dispersion aqueuse, le solvant ou l'eau est éliminé dans le cas de la solution ou de la dispersion aqueuse, le polymère est ensuite réticulé par un rayonnement riche en énergie, en particulier une lumière U.V. et les supports obtenus, enduits du polymère, sont collés sur des substrats humides, en particulier très profondément refroidis.
